# EUROPEAN PATENT APPLICATION

(11) **EP 0 678 245 A1**
(43) Date of publication of application: **25.10.1995**
(21) Application number: 95301063.4
(22) Date of filing: 20.02.1995
(51) Int. Cl.: A23G 3/20, A23P 1/00, A23G 9/28

(54) **Dispensing apparatus**

(30) Priority: 24.02.1994 GB 9403485
(71) Applicant: CPC INTERNATIONAL INC., Englewood Cliffs New Jersey 07632-9976 (US)
(72) Inventor: Brereton, Geoffrey Robert, Tavistock, Devon PL20 7HQ (GB)
(74) Representative: Stevens, Ian Edward

(57) **Abstract**

Apparatus for aseptically dispensing two or more streams of different foodstuffs is disclosed. The apparatus comprises a dispensing head, coupling means and two or more laterally spaced aseptic fillers, the dispensing head (14) comprising two or more conduit means separate from each other and providing passages for the respective streams. The conduit means have outlets which are arranged such that foodstuffs may be dispensed through all outlets simultaneously into a single container and the dispensing head is sealingly attached directly to one filler head (11) and is connected to the other filler (12) or fillers by the coupling means (33,16,34) to allow the foodstuffs to pass from the fillers to the conduit means.

## Description

This invention relates to dispensing apparatus and, in particular, to apparatus for dispensing two or more different foodstuffs into a single container.

The packaging of different foodstuffs (or different types of the same foodstuff) as vertical segments in a single container is well-known. It is a general requirement for this type of packaging that the foodstuffs must be sufficiently viscous at the temperature at which they are dispensed into the container to allow their dispensation and subsequent handling without substantial mixing of the foodstuffs.

A method for filling a container with different foodstuffs to give a vertically segmented pattern is disclosed in US 3991217 which relates to the packaging of three different ice cream products in a single package. The apparatus disclosed in this document brings the three different products together in a cylinder before they are pushed into the container by a piston which moves within the cylinder. Hence, this apparatus includes means for delivering the patterned product to the container in addition to means for delivering the products to the cylinder. This process has the disadvantage that, where the foodstuffs are of relatively low viscosity, substantial mixing of the different foodstuffs may occur in the cylinder before or during dispensation. A further disadvantage of this apparatus is the possible adherence of the foodstuffs to the piston and to the cylinder which can also cause mixing.

US 4666723 discloses an apparatus and a process for producing a vertically segmented spread-able cheese product. In this process different cheeses are fed into a shaping zone in which they are kept separate by partition walls. Again, the apparatus requires means for delivering the patterned product to the container in addition to means for feeding the products into the shaping zone.

Apparatus for simultaneously discharging two or more kinds of confectionery is disclosed in US 1561302. However, this apparatus requires adaptation of a filler by incorporating metal plates and fixing means inside the filler. This type of adaptation to the interior of the filler would not be possible with many conventional fillers and is clearly particularly disadvantageous where aseptic dispensation is required. Another apparatus which involves adaptation of the interior of a filler is disclosed in US 2202917.

A filler head for the distribution of food products to a container to give a checked appearance is taught in US 3392685. The filler head requires hoses for attachment to each of the fillers and has open sides. Both of these features make sterile conditions difficult to achieve and the apparatus therefore has disadvantages when used for aseptically dispensing foodstuffs.

It is an object of the present invention to provide an apparatus for aseptically dispensing different foodstuffs into a single container so as to produce a vertically segmented arrangement of foodstuffs in the container which minimises mixing of the products and which does not require specific means for delivering the product into the container in addition to means for feeding the foodstuffs into the apparatus. This object has been achieved by the development of a novel dispensing means which allows conventional fillers to be used to deliver the products into the container.

Accordingly, the present invention provides apparatus for aseptically dispensing two or more streams of different foodstuffs comprising a dispensing head, coupling means and two or more laterally spaced aseptic fillers, each of the fillers having a filling head, the dispensing head comprising two or more conduit means separate from each other and providing passages for the respective streams, the two or more conduit means having outlets which are arranged such that foodstuffs may be dispensed through all outlets simultaneously into a single container, the dispensing head being sealingly attached directly to one filler head and being connected to the other filler or fillers by the coupling means to allow the foodstuffs to pass from the fillers to the conduit means.

The outlets will, typically, be grouped in the dispensing head within the cross-sectional shape of the container to be filled. Preferably, the dispensing head comprises two conduit means terminating in respective spaced outlets. Maintaining the outlets spaced apart from one another ensures that no mixing of the products occurs before delivery into the container.

The outlets are grouped in the dispensing head in any appropriate way for producing the desired pattern in the product. One preferred arrangement comprises four outlets arranged in a square array.

The conduit means may each have a single outlet or may be divided to provide a number of outlets. The dispensing head may, for example, comprise diagonally opposite outlets which communicate with a single conduit means and, thereby, a single filler.

A preferred dispensing head of this invention comprises a block in the form of a manifold and the coupling means by which the fillers are connected to the conduit means conveniently comprises a suitably shaped pipe.

It is an advantage of the present invention that a vertically segmented product may be produced aseptically when the apparatus of the present invention includes conventional foodstuff fillers. Minor adaptation of the conventional fillers may be necessary to allow connection to the dispensing head and coupling means.

The apparatus of the invention may comprise means for sterilising the foodstuffs after they have left the dispensing head. Suitable means for sterilising include, for example, a conventional sterilising leg.

By avoiding the need for a specific delivery mechanism for dispensing the product into the container and relying on the fillers for this purpose, the apparatus is relatively easily maintained in an aseptic condition.

The invention will now be described by way of example with reference to the accompanying drawings wherein:
Figure 1 shows a part cross-sectional view of a filling apparatus according to the invention;
Figure 2 is a plan view of a dispensing head for use in the apparatus of the invention;
Figure 3 is a cross-sectional view of the dispensing head shown in Figure 2 along lines A-A'; and
Figure 4 is a cross-sectional view of the dispensing head shown in Figure 2 along lines B-B'.

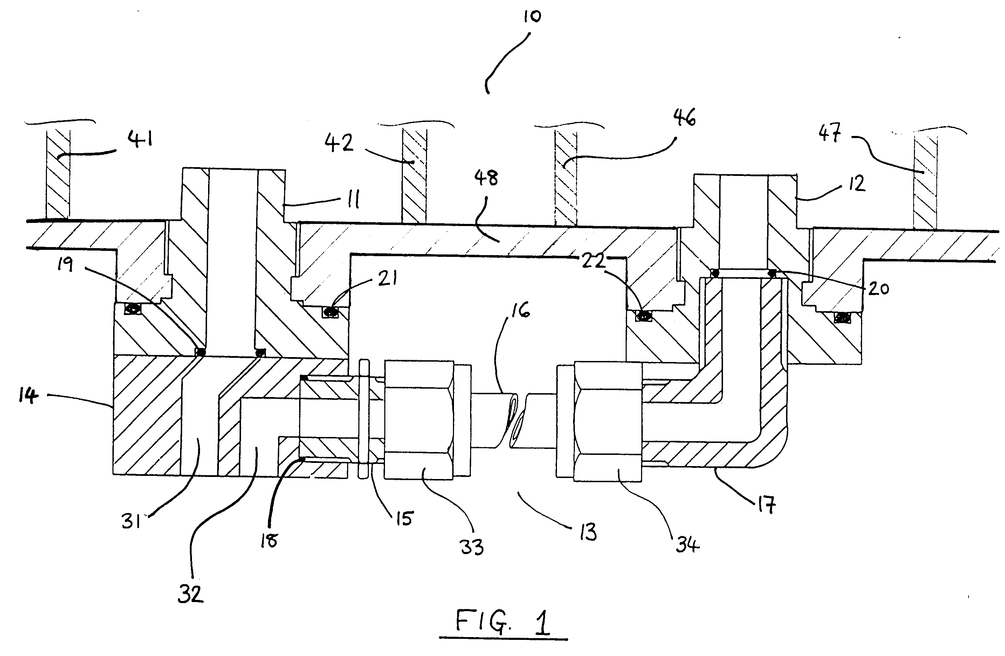

Referring to Figure 1, filling apparatus 10 comprises a first filler head 11 and a second filler head 12 connected to respective fillers, not fully shown in Figure 1, whose side walls 41, 42 for the first filler and 46, 47 for the second filler are partly depicted. Base member 48 provides one end wall of the fillers and filler heads 11 and 12 are in screw-threaded engagement with base member 48 although it will be appreciated that other means of engagement may be used. Dispensing head 14 is sealingly attached directly to first filler head 11 and to the second filler head 12 by way of coupling means 13. Coupling means 13 comprises first connector 15 which is sealingly engaged (e.g., by screw-threaded connection) to dispensing head 14 and forms a connection to pipe 16 with O-ring 18 providing the seal. O-ring 19 forms a seal between dispensing head 14 and first filler 11. Second connector 17 is attached to the other end of pipe 16 and is sealingly attached to second filler 12. O-ring 20 provides the seal between second filler head 12 and second connector 17. As illustrated in Figure 1, second filler head 12 has been adapted to receive second connector 17 by enlarging its bore and may be a screw-thread or other suitable engagement with second connector 17. Filler heads 11 and 12 each engage their respective filler to form an outlet from the filler with O-rings 21 and 22 forming a seal between filler heads 11 and 12 and the main body of the filler.

Passages 31, 32 are defined within dispensing head 14 for the foodstuff product streams. Passage 31 receives product from filler head 11 whilst passage 32 receives product from filler head 12 via the apertures through first connector 15, pipe 16 and second connector 17. Nuts 33 and 34 provide the engagement between pipe 16 and first and second connectors 15 and 17. In use, a container is placed under passages 31,32 in dispensing head 14 and is filled with product provided from first and second fillers by delivery means associated with the fillers.

Sterilisation means (not shown in Figure 1) may be attached to dispensing head 14 on the side opposite to the filler head 11 to sterilise the foodstuffs after they have left the dispensing head 14 and before they are dispensed into a container. Conventional sterilisation means, such as a sterilising leg, may be used for this purpose.

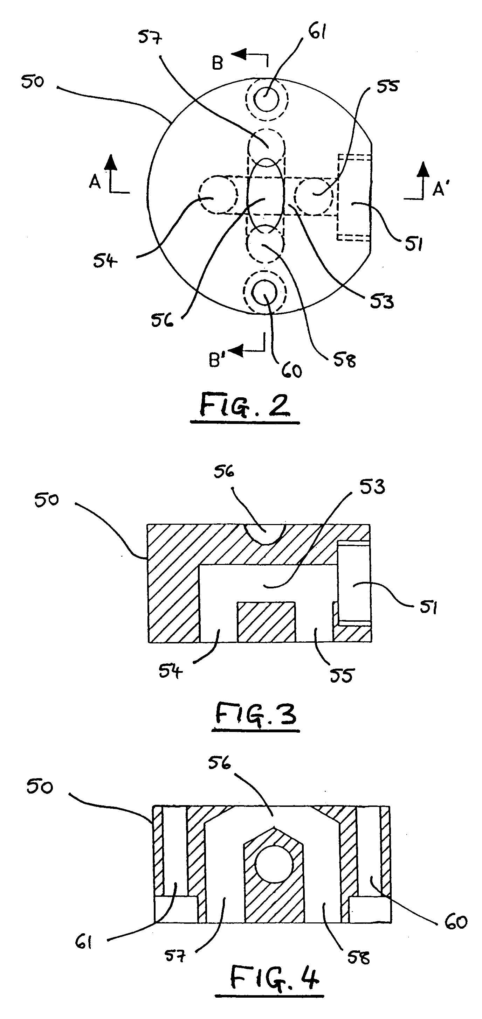

Dispensing head 50 shown in Figures 2 to 4 represents another embodiment of the dispensing head of the present invention which enables a container to be filled with two different foodstuffs arranged as diagonally disposed quadrants of the same foodstuffs. Recess 51 is provided in dispensing head 50 for receiving a connector through which, in use, the foodstuff is supplied. Passage 53 links recess 51 to first outlets 54 and 55 thus allowing the provision of two streams of foodstuff from a first filler. Aperture 56 is provided in dispensing head 50 for receiving product from a second filler connected above dispensing head 50. Second outlets 57 and 58 communicate with aperture 56 to provide two foodstuff streams from the second filler. Bores 60,61 in dispensing head 50 enable the head 50 to be attached to a filler via suitable bolts and receiving portions on the filler.

## Claims

**1** Apparatus for aseptically dispensing two or more streams of different foodstuffs comprising a dispensing head, coupling means and two or more laterally spaced aseptic fillers, each of the fillers having a filling head, the dispensing head comprising two or more conduit means separate from each other and providing passages for the respective streams, the two or more conduit means having outlets which are arranged such that foodstuffs may be dispensed through all outlets simultaneously into a single container, the dispensing head being sealingly attached directly to one filler head and being connected to the other filler or fillers by the coupling means to allow the foodstuffs to pass from the fillers to the conduit means.

**2** Apparatus as claimed in claim 1 wherein the dispensing head comprises two conduit means terminating in respective spaced outlets.

**3** Apparatus as claimed in claim 1 or claim 2 wherein the dispensing head comprises four outlets arranged in a square array.

**4** Apparatus as claimed in any one of claims 1 to 3 wherein the dispensing head comprises diagonally opposite outlets which communicate with a single conduit means and, thereby, a single filler.

**5** Apparatus as claimed in any one of claims 1 to 4 wherein the dispensing head comprises a block in the form of a manifold.

**6** Apparatus as claimed in any one of claims 1 to 5 wherein the coupling means is a pipe.
